# EUROPÄISCHE PATENTSCHRIFT

(11) **EP 0 618 100 B1**
(45) Veröffentlichungstag und Bekanntmachung des Hinweises auf die Patenterteilung: **13.11.1996**
(21) Anmeldenummer: 94103844.0
(22) Anmeldetag: 12.03.1994
(51) Int. Cl.: B60J 7/22

(54) **Cabriolet mit einem Windschutz**
Air deflector for convertible
Déflecteur de vent pour cabriolet

(30) Priorität: 02.04.1993 DE 4310881
(43) Veröffentlichungstag der Anmeldung: 05.10.1994
(73) Patentinhaber: Dr.Ing. h.c. F. Porsche Aktiengesellschaft, D-70435 Stuttgart-Zuffenhausen (DE)
(72) Erfinder: Raisch, Deiter, D-71277 Rutesheim (DE); Homann, Bodo, D-71296 Heimsheim (DE); Koehler, Harald, D-71254 Ditzingen (DE)

(56) Entgegenhaltungen:
- EP-A- 0 394 676
- EP-A- 0 398 027
- DE-A- 3 935 630

## Beschreibung

Die Erfindung bezieht sich auf ein Cabriolet mit einem hinter einer Sitzreihe angeordneten, sich über diese nach oben erstreckenden, vorzugsweise über die gesamte Innenraumbreite verlaufenden Windschutz, der von einer Ruhelage in eine Wirkstellung verlagerbar ist.

Bei einer bekannten Anordnung der eingangs genannten Gattung (DE-U-1 797 558) ist hinter den Vordersitzen eines Cabriolets ein Windschutz vorgesehen, der durch eine in der Mitte geteilte Plexiglasscheibe gebildet wird. Die Plexiglasscheibe wird von einer Rahmenleiste in Lage gehalten, die schwenkbar mit einer seitlichen Aufbauwand verbunden ist.

Dieser Anordnung haftet der Nachteil an, daß das Windschott bei Nichtgebrauch einen zusätzlichen Stauraum im Kofferraum oder Fahrgastraum benötigt und daß die Bedienung bzw. Montage des Windschotts unhandlich ist.

Aufgabe der Erfindung ist es, an einem mit einem Windschutz versehenen Cabriolet solche Vorkehrungen zu treffen, daß der Windschutz einfach bedienbar ist und in seiner Nichtgebrauchsstellung bei geschlossenem Verdeck platzsparend unterbringbar ist.

Erfindungsgemäß wird dies durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsachlich erzielten Vorteile sind darin zu sehen, daß durch die schwenkbare Lagerung des Windschutzes am Verdeck eine einfache Bedienung und eine platzsparende Unterbringung des Windschutzes erzielt wird. Ferner kann der Windschutz immer montiert bleiben und braucht bei Nichtbedarf nicht abgenommen und im Kofferraum verstaut zu werden.

Der Windschutz ist einfach herstellbar und leicht am Verdeck anbringbar. Die vorgesehenen Arretiereinrichtungen bewirken, daß der Windschutz sowohl in der Ruhestellung als auch in der Wirkstellung in den vorgesehenen Positionen verbleibt.

Durch Anordnung einer zusätzlichen, etwa horizontalen Abdeckung hinter dem Windschutz wird die Wirkung des Windschutzes noch optimiert.

Ein Ausführungsbeispiel der Erfindung ist in der Zeichnung dargestellt und wird im folgenden näher erläutert.
Es zeigt
- Fig. 1: eine Teilseitenansicht eines Cabriolets mit einem Verdeck und einem Windschutz,
- Fig. 2: eine Teilansicht von hinten auf den Windschutz und das Lagerelement mit der Arretiervorrichtung in größerem Maßstab,
- Fig. 3: einen Schnitt nach der Linie III-III der Fig. 2 in größerem Maßstab,
- Fig. 4: eine Einzelheit X der Fig. 1 in größerem Maßstab,

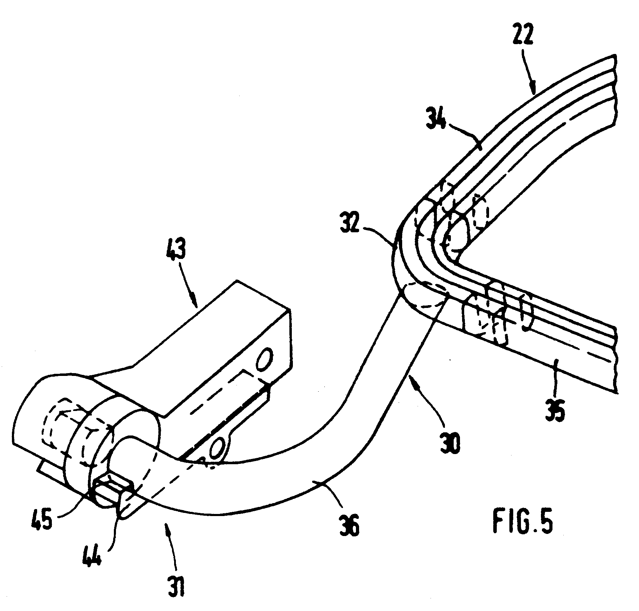

- Fig. 5: eine Schrägansicht von hinten auf das Lagerelement und die Arretiereinrichtung des Windschutzes,
- Fig. 6: eine perspektivische Ansicht des Lagerelements mit der Arretiereinrichtung,
- Fig. 7: eine perspektivische Ansicht der Wippe,
- Fig. 8: eine perspektivische Ansicht des Gegenlagers.

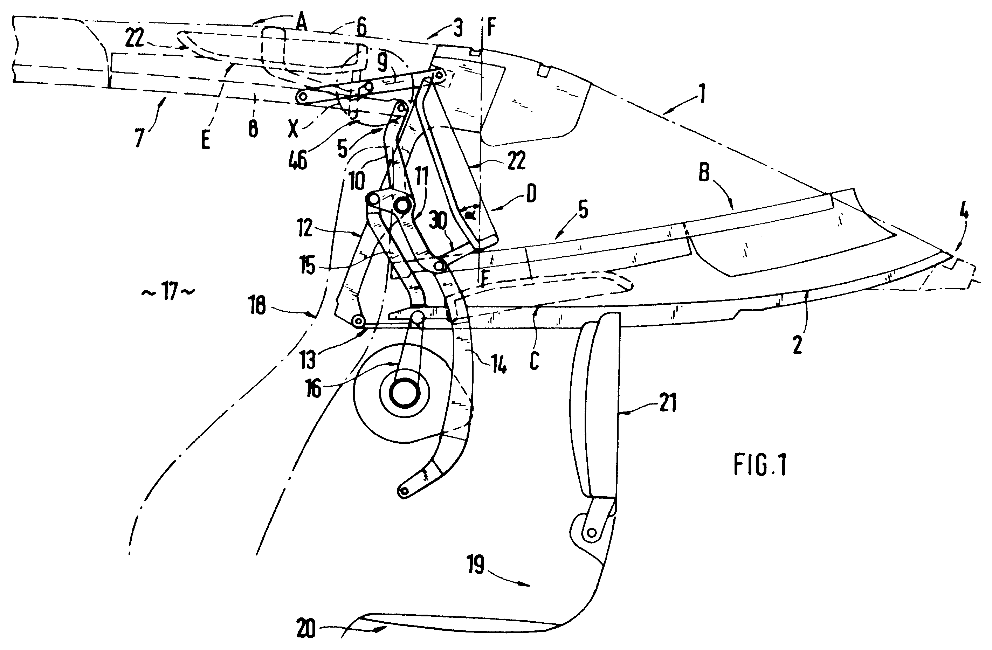

Das in Fig. 1 dargestellte Cabriolet 1 umfasst oberhalb einer Gürtellinie 2 ein Verdeck 3, das von einer Schließstellung A nach hinten in eine zurückgeklappte Offenstellung B bewegbar ist und umgekehrt. In der Offenstellung B liegt das Verdeck 3 etwas oberhalb der Gürtellinie 2 in einem Heckbereich 4. In der Schließstellung A erstreckt sich das Verdeck 3 von einem nicht naher gezeigten Windschutzscheibenrahmen bis zum Heckbereich 4. Das Verdeck 3 setzt sich im Ausführungsbeispiel aus einem Verdeckgestänge 5 und einem Verdeckbezug 6 zusammen. Das Verdeckgestänge 5 umfasst im dargestellten Bereich einen Dachrahmen 7, der durch seitliche Längsholme 8 und einen benachbart des oberen Windschutzscheibenrahmens verlaufenden, nicht näher dargestellten querverlaufenden Träger gebildet wird.

Die einteilig ausgebildeten Längsholme 8 sind einerseits über einen Dachrahmenlenker 9 und andererseits über einen Hebelarm 10 eines Winkelhebels 11 gelenkig mit einer Hauptverdecksäule 12 verbunden. Die Hauptverdecksäule 12 ist an beiden Fahrzeuglängsseiten jeweils an einem in Höhe der Gürtellinie 2 vorgesehenen Verdecklager 13 schwenkbar gelagert.

Ferner umfasst das Verdeckgestänge 5 Lenker 14, 15, die mit dem Winkelhebel 11 und einer Antriebsvorrichtung 16 zusammenwirken.

In einem Fahrgastraum 17 des Cabriolets sind vordere Sitze 18 und eine Hintersitzanlage 19 vorgesehen, wobei von den vorderen Sitzen 18 lediglich die Rückenlehne dargestellt ist. Die Hintersitzanlage 19 umfasst ein Sitzteil 20 und eine schwenkbare Lehne 21.

Damit die auf den vorderen Sitzen 18 befindlichen Insassen bei geöffnetem Verdeck 3 während der Fahrt vor unerwünschter, von rückwärts her einwirkender Zugluft geschützt werden, ist ein Windschutz 22 vorgesehen.

Erfindungsgemäß ist der schwenkbare Windschutz 22 am Verdeckgestänge 5 des Verdecks 3 gelagert. Bei geschlossenem Verdeck 3 verläuft der Windschutz 22 mit geringem Abstand zum darüberliegenden Verdeckbezug 6 des Verdecks 3, wobei der Windschutz 22 annähernd parallel zum Verdeckbezug 6 ausgerichtet ist (Ablagestellung E).

Bei zurtickgeklapptem Verdeck 3 (Offenstellung B) ist der Windschutz 22 von einer benachbart der Gürtellinie 2 verlaufenden Ruhestellung C nach oben in eine aufrechte Wirkstellung D bewegbar und umgekehrt.

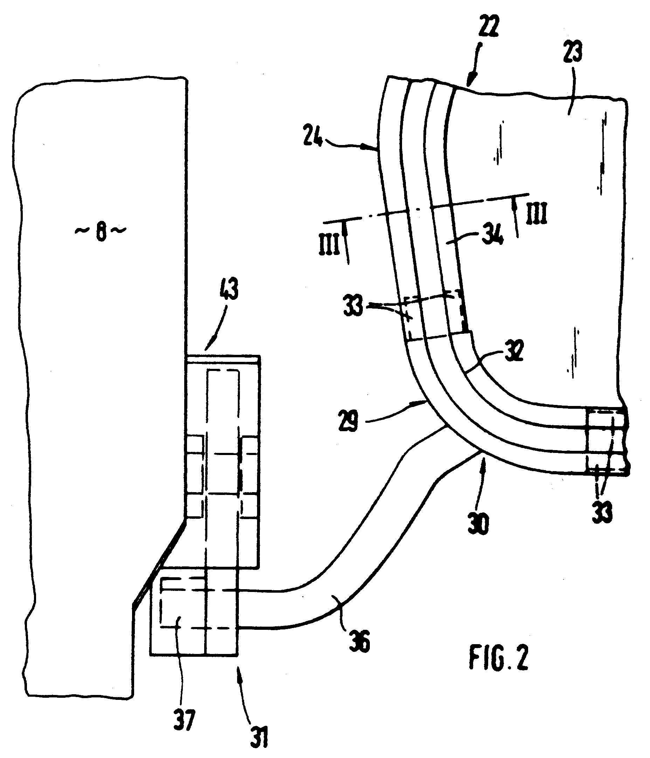

Im Ausführungsbeispiel wird der Windschutz 22 durch einen mit einer Bespannung 23 versehenen Rahmen 24 gebildet (Fig.2). Die Bespannung 23 bedeckt die vom Rahmen 24 umgebene Fläche vollständig und kann durch ein elastisch verformbares Netz, eine durchsichtige Folie, eine Platte aus Kunststoff, eine Glas- oder Polyglasscheibe oder dergleichen gebildet werden. Der Rahmen 24 ist - in Wirkstellung D und von hinten gesehen - etwa rechteckförmig, trapezförmig, oval oder dergleichen ausgebildet. Im Querschnitt gesehen kann der Rahmen 24 durch ein Rohr oder ein sonstiges Profil gebildet werden.

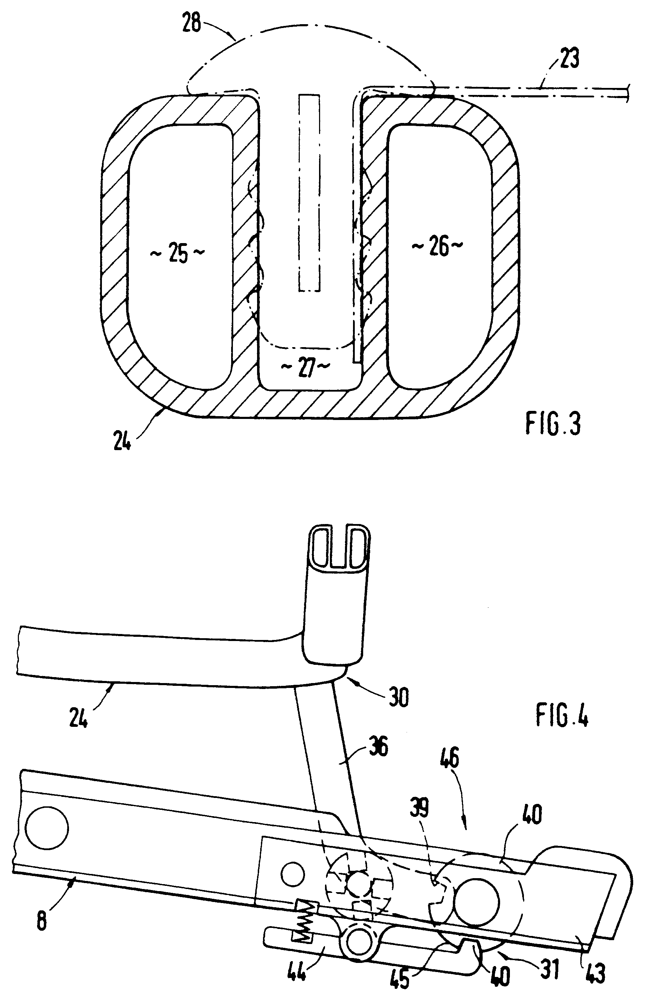

Im Ausführungsbeispiel (Fig. 2 und 3) weist der Rahmen 24 - im Querschnitt gesehen - zwei mit Abstand zueinander angeordnete Hohlprofilabschnitte 25, 26 auf, zwischen denen sich ein etwa U-förmiger Aufnahmeabschnitt 27 erstreckt. In diesen Aufnahmeabschnitt 27 ist ein elastischer Keder 28 zum Befestigen der Bespannung 23 eingesetzt. Die Bespannung 23 kann zusätzlich abschnittsweise mit dem Rahmen 24 verklebt sein (vorzugsweise im Bereich des Aufnahmeabschnitts 27).

Der Windschutz 22 erstreckt sich in der Wirkstellung D über die Rückenlehne der Sitze 18 hinaus nach oben und verläuft vorzugsweise über die gesamte Innenraumbreite des Fahrgastraumes 17. Ferner ist der Windschutz 22 gegenüber einer vertikalen Hilfsebene F-F leicht nach vorne hin geneigt. (Winkel alpha).

An gegenüberliegenden unteren Eckbereichen 29 des Rahmens 24 sind Lagerelemente 30 vorgesehen, die vorzugsweise durch Spritzgußteile aus Kunststoff gebildet werden. Jedes Lagerelement 30 umfasst eine integrierte Arretiereinrichtung 31, damit der Windschutz 22 sowohl in der Ruhestellung C als auch in der Wirkstellung D festlegbar ist.

Gemäß Fig. 2 besteht jedes Lagerelement 30 aus einem ersten bogenförmigen Abschnitt 32, der an seinen beiden Enden vorstehende Zapfen 33 aufweist. Die Zapfen 33 sind der Form der Hohlprofilabschnitte 25, 26 der Rahmenteile 34, 35 angepasst und ragen bei montiertem Windschutz abschnittsweise in diese Hohlprofilabschnitte 25, 26 hinein (Steckverbindung).

Der bogenförmige Abschnitt 32 bildet einen gerundeten Eckbereich des Rahmens 24.

An den ersten Abschnitt 32 des Lagerelementes 30 ist ein abgewinkelter, gebogener Abschnitt 36 angeschlossen. Das freie Ende 37 des zweiten Abschnitts 36 ist etwa rechtwinkelig zu den angrenzenden Längsholmen 8 ausgerichtet und wirkt mit der Arretiereinrichtung 31 zusammen.

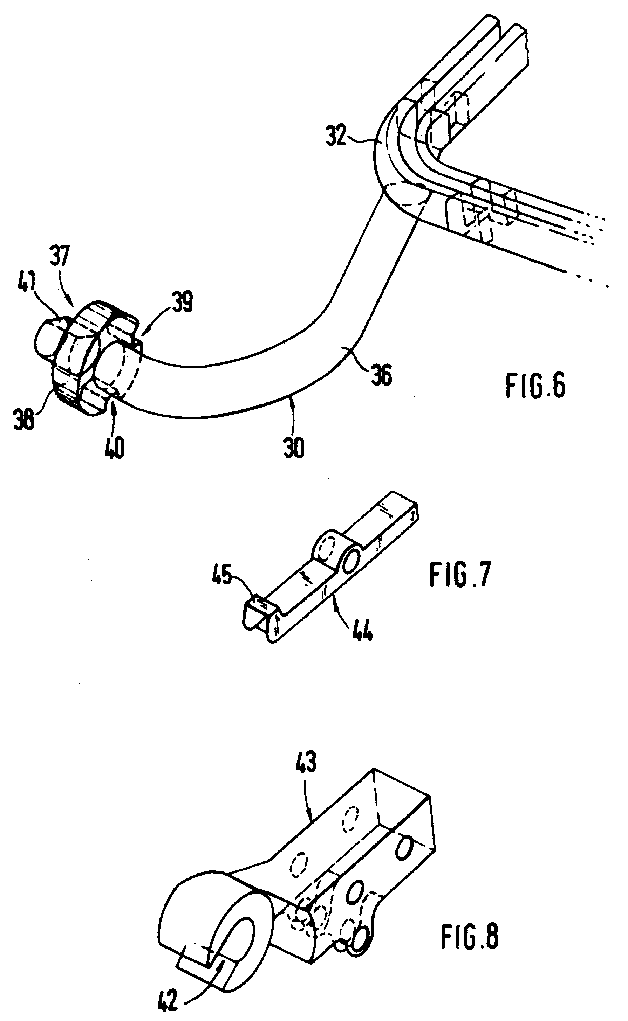

Die Arretiereinrichtung 31 umfasst einen mit Abstand zum freien Ende 37 verlaufenden Kragen 38, der den rohrförmigen Abschnitt 36 im Durchmesser überragt. An diesen Kragen 38 sind zwei mit Abstand zueinander angeordnete vertiefte Rasten 39, 40 vorgesehen, die die beiden Endstellungen des Windschutzes 22 festlegen (Fig. 6).

Ein einseitig abgeflachter zapfenförmiger Endbereich 41 des Abschnitts 36 des Lagerelements 30 ragt dabei in eine geschlitzte Aufnahme 42 eines Gegenlagers 43 der Arretiereinrichtung 31 hinein. Am Gegenlager 43, das mittels Schrauben am Längsholm 8 befestigt ist, ist ferner eine federbelastete Wippe 44 schwenkbar gelagert, deren abgestellte endseitige Zunge 45 je nach Stellung des Windschutzes 22 in eine der Rasten 39, 40 hineinragt.

Die Befestigung des Windschutzes 22 am Längsholm 8 erfolgt in einem hinteren Endbereich 46 des Längsholmes 8 (in Schließstellung A des Verdecks 3 gesehen).

Zur Optimierung des Schutzes gegen Zugerscheinungen kann bei zurückgeklapptem Verdeck B und hochgestelltem Windschutz 22 der hinter dem Windschutz 22 liegende Aufbaubereich oder Verdeckbereich durch eine nicht näher gezeigte Abdeckung verschlossen sein, so daß die Luft nicht unter dem Windschutz 22 hindurch nach vorne zu den Sitzinsassen der vorderen Sitze 18 strömen kann. Diese vorzugsweise elastische Abdeckung kann durch eine Persenning, ein Rollo oder dergleichen gebildet werden.

Es besteht auch die Möglichkeit, daß der Windschutz 22 durch ein rahmenloses, durchsichtiges, plattenförmiges Element gebildet wird, das an seinen beiden Längsseiten über Lagerelemente am Verdeck 3 befestigt ist.

## Patentansprüche

1. Cabriolet mit einem hinter einer Sitzreihe angeordneten, sich über diese hinaus nach oben erstreckenden, vorzugsweise über die gesamte Innenraumbreite verlaufenden Windschutz (22), der von einer Ruhelage (C) in eine Wirkstellung (D) verlagerbar ist, **dadurch gekennzeichnet,** daß der schwenkbare Windschutz (22) am Verdeck (3) des Cabriolets (1) gelagert ist.

2. Cabriolet nach Anspruch 1, **dadurch gekennzeichnet,** daß bei geschlossenem Verdeck (A) der Windschutz (22) unterhalb des Verdeckbezuges (6) des Verdecks (3) verläuft, wobei der Windschutz (22) annähernd parallel zum Verdeckbezug (6) ausgerichtet ist.

3. Cabriolet nach Anspruch 1, **dadurch gekennzeichnet,** daß in Offenstellung (B) des Verdecks (3) der Windschutz (22) von einer benachbart der Gürtellinie (2) verlaufenden Ruhestellung (C) nach oben in eine aufrechte Wirkstellung (D) bewegbar ist.

4. Cabriolet nach Anspruch 1, **dadurch gekennzeichnet,** daß der Windschutz (22) einen mit einer Bespannung (23) versehenen profilierten Rahmen (24) umfasst, wobei die Bespannung (23) durch ein elastisch verformbares Netz oder ein durchsichtiges Element wie eine Folie, eine Platte, eine Scheibe oder dergleichen gebildet wird.

5. Cabriolet nach Anspruch 4, **dadurch gekennzeichnet,** daß der Rahmen (24) - in der Draufsicht gesehen - etwa rechteckförmig, trapezförmig, oval oder dergleichen ausgebildet ist.

6. Cabriolet nach einem oder mehreren der vorangegangenen Ansprüche, **dadurch gekennzeichnet,** daß an gegenüberliegenden unteren Eckbereichen (29) des Rahmens (24) Lagerelemente (30) vorgesehen sind, wobei in die Lagerelemente (30) Arretiereinrichtungen (31) integriert sind, durch die der Windschutz (22) in der Ruhestellung (C) und der Wirkstellung (D) festlegbar ist.

7. Cabriolet nach einem oder mehreren der vorangegangenen Ansprüche, **dadurch gekennzeichnet,** daß der Windschutz (22) an seitlichen Längsholmen (8) des Verdeckgestänges (5) des Verdecks (3) schwenkbar gelagert ist.

8. Cabriolet nach Anspruch 7, **dadurch gekennzeichnet,** daß bei geschlossenem Verdeck (3) die Lagerelemente (30) mit den integrierten Arretiereinrichtungen (31) benachbart eine hintenliegenden Endbereich der seitlichen Längsholme (8) des Verdeckgestänges (5) angeordnet sind.

9. Cabriolet nach Anspruch 6, **dadurch gekennzeichnet,** daß jedes Lagerelement (30) einen ersten bogenförmigen Abschnitt (32) umfasst, der mit endseitigen vorstehenden Zapfen (33) in angrenzende Hohlprofilabschnitte (25, 26) des Rahmens (24) einsteckbar ist und daß an den ersten Abschnitt (32) ein zweiter abgewinkelter Abschnitt (36) angeschlossen ist, wobei am freien Ende (37) des zweiten Abschnitts (36) die Arretiereinrichtung (31) vorgesehen ist.

10. Cabriolet nach einem oder mehreren der vorangegangenen Ansprüche, **dadurch gekennzeichnet,** daß die Arretiereinrichtung (31) einen am zweiten Abschnitt (36) des Lagerelementes (30) angeordneten Kragen (38) umfasst, an dem vertiefte Rasten (39, 40) vorgesehen sind, wobei die Rasten (39, 40) mit einer am Gegenlager (43) angeordneten, federbelasteten Wippe (44) zusammenwirken.

11. Cabriolet nach einem oder mehreren der vorangegangenen Ansprüche, **dadurch gekennzeichnet,** daß bei zurückgeklapptem Verdeck (3) und hochgestelltem Windschutz (22) der hinter dem Windschutz (22) liegende Verdeck- oder Aufbaubereich durch eine Abdeckung verschlossen ist, so daß die Luft nicht unter dem Windschutz (22) hindurch nach vorne zu den Sitzen (18) strömen kann.

## Claims

1. A convertible with a windbreak (22) which is arranged behind a row of seats and extends upwards beyond the said row of seats and which preferably extends over the entire width of the interior and is displaceable from a rest position (**C**) into an operative position (**D**), **characterized in that** the pivotable windbreak (22) is mounted on the top (3) of the convertible (1).

2. A convertible according to Claim 1, **characterized in that** with the top closed (**A**) the windbreak (22) extends below the covering (6) of the top (3), the windbreak (22) being orientated substantially parallel to the top covering (6).

3. A convertible according to Claim 1, **characterized in that** in the opened position (**B**) of the top (3) the windbreak (22) is movable from a rest position (**C**), extending adjacent to the waist line (2), upwards into an upright operative position (**D**).

4. A convertible according to Claim 1, **characterized in that** the windbreak (22) comprises a profiled frame (24) provided with a covering (23), wherein the covering (23) is formed by a resiliently deformable web or a transparent member such as a foil, a plate, a disc or the like.

5. A convertible according to Claim 4, **characterized in that,** as seen in plan view, the frame (24) is substantially rectangular, trapezoidal, oval or the like.

6. A convertible according to one or more of the preceding Claims, **characterized in that** support members (30) are provided on opposite lower corner areas (29) of the frame (24), wherein locking devices (31), by which the windbreak (22) can be fixed in the rest position (**C**) and the operative position (**D**), are integrated in the bearing members (30).

7. A convertible according to one or more of the preceding Claims, **characterized in that** the windbreak (22) is mounted pivotably on lateral longitudinal crossheads (8) of the lever system (5) of the top (3).

8. A convertible according to Claim 7, **characterized in that** when the top (3) is closed the support members (30) with the integrated locking devices (31) are arranged adjacent to a rearward end area of the lateral longitudinal crossheads (8) of the lever system (5) of the top.

9. A convertible according to Claim 6, **characterized in that** each support member (30) comprises a first arcuate portion (32) which is insertible with pins (33) projecting at the end thereof into adjacent hollow-section portions (25, 26) of the frame (24), and a second, angled portion (36) is attached to the first portion (32), wherein the locking device (31) is provided at the free end (37) of the second portion (36).

10. A convertible according to one or more of the preceding Claims, **characterized in that** the locking device (31) comprises a collar (38) which is arranged on the second portion (36) of the support member (30) and on which recessed catches (39, 40) are provided, wherein the catches (39, 40) cooperate with a spring-loaded rocker (44) mounted on the abutment (43).

11. A convertible according to one or more of the preceding Claims, **characterized in that** when the top (3) is folded back and the windbreak (22) is raised the area of the top or body situated behind the windbreak (22) is closed by a covering, so that the air cannot flow forwards below the windbreak (22) through to the seats (18).

## Revendications

1. Cabriolet avec un déflecteur (22) placé derrière une rangée de sièges, s'étendant vers le haut au-delà de celui-ci, de préférence sur toute la largeur de l'habitacle, qui est déplaçable d'une position de repos (C) dans une position active (D), caractérisé en ce que le déflecteur (22) pivotant est monté sur la capote (3) du cabriolet (1).

2. Cabriolet selon la revendication 1, caractérisé en ce que dans le cas où la capote (A) est fermée, le déflecteur (22) s'étend au-dessous de la garniture (6) de la capote (3), le déflecteur (22) étant orienté à peu près parallèlement à la garniture (6) de la capote.

3. Cabriolet selon la revendication 1, caractérisé en ce qu'en position ouverte (B) de la capote (3), le déflecteur (22) est déplaçable d'une position de repos (C) , s'étendant à proximité de la ligne médiane (2), vers le haut, dans une position active (D) verticale.

4. Cabriolet selon la revendication 1, caractérisé en ce que le déflecteur (22) comprend un cadre (24) profilé, pourvu d'une couverture (23), la couverture (23) étant formée par un filet élastiquement déformable ou un élément transparent tel qu'une feuille, une plaque, une vitre ou similaire.

5. Cabriolet selon la revendication 4, caractérisé en ce que le cadre (24) - vu de dessus - est à peu près rectangulaire, trapézoïdal, ovale ou similaire.

6. Cabriolet selon une ou plusieurs des revendications précédentes, caractérisé en ce qu'en des zones d'angle (29) inférieures, opposées, du cadre (24) sont prévus des éléments d'appui (30), des dispositifs de blocage (31), par lesquels le déflecteur (22) peut être fixé dans la position de repos (C) et dans la position active (D), étant intégrés dans les éléments d'appui (30).

7. Cabriolet selon une ou plusieurs des revendications précédentes, caractérisé en ce que le déflecteur (22) est monté pivotant sur des longerons (8) latéraux de la tringlerie (5) de la capote (3).

8. Cabriolet selon la revendication 7, caractérisé en ce que dans le cas où la capote (3) est fermée, les éléments d'appui (30) avec les dispositifs de blocage (31) intégrés sont situés au voisinage d'une zone d'extrémité située à l'arrière des longerons (8) latéraux de la tringlerie (5) de la capote.

9. Cabriolet selon la revendication 6, caractérisé en ce que chaque élément d'appui (30) comprend une première portion (32) en arc, qui peut être enfichée, avec des tenons (33) saillants d'extrémité dans des portions de profilé creux (25, 26) adjacents du cadre (24) et en ce qu'à la première portion (32) se rattache une deuxième portion (36) coudée, le dispositif de blocage (31) étant prévu à l'extrémité libre (37) de la deuxième portion (36).

10. Cabriolet selon une ou plusieurs des revendications précédentes, caractérisé en ce que le dispositif de blocage (31) comprend un collet (38), disposé sur la deuxième portion (36) de l'élément d'appui (30), sur lequel sont prévues des encoches (39, 40) en creux, les encoches (39, 40) coopérant avec une bascule (44) soumise à l'action d'un ressort, placée sur le contre-appui (43).

11. Cabriolet selon une ou plusieurs des revendications précédentes, caractérisé en ce que dans le cas où la capote (3) est rabattue en arrière et le déflecteur (22) est relevé, la zone de capote ou de carrosserie, située derrière le déflecteur (22), est fermée par une couverture, de sorte que l'air ne peut s'écouler sous le déflecteur (22), vers l'avant, vers les sièges (18).
